# EUROPÄISCHE PATENTSCHRIFT

(11) **EP 0 539 553 B1**
(45) Veröffentlichungstag und Bekanntmachung des Hinweises auf die Patenterteilung: **08.04.1998**
(21) Anmeldenummer: 92909836.6
(22) Anmeldetag: 08.05.1992
(51) Int. Cl.: B01D 19/00

(54) **VERFAHREN ZUM TROCKNEN UND/ODER ENTGASEN EINER FLÜSSIGKEIT**
PROCESS FOR DRYING AND/OR DEGASSING A LIQUID
PROCEDE POUR LE SECHAGE ET/OU LE DEGAZAGE D'UN LIQUIDE

(30) Priorität: 08.05.1991 DE 4115050
(43) Veröffentlichungstag der Anmeldung: 05.05.1993
(73) Patentinhaber: Sterling Fluid Systems (Germany) GmbH, 25524 Itzehoe (DE)
(72) Erfinder: ZIMMERMANN, Erwin, D-2210 Heiligenstedten (DE); SIERK, Thorsten, D-2210 Itzehoe (DE)
(74) Vertreter: Glawe, Delfs, Moll & Partner
(86) Internationale Anmeldenummer: EP9201006
(87) Internationale Veröffentlichungsnummer: WO9219353

(56) Entgegenhaltungen:
- WO-A-85/00298
- DE-A- 3 239 066
- GB-A- 2 202 167
- US-A- 4 158 092
- TECHNISCHE RUNDSCHAU Bd. 77, Nr. 46, November 1985, BERN Seiten 64 - 65; HANNS BENNINGHOFF: 'LEICHTFLUECHTIGE KOHLENWASSERSTOFFE: STAND DER ABWASSERTECHNIK?
- Kirk-Othmer, Encyclopedia of Chemical Technology, Volume 8, John Wiley & Sons, 1979, Seiten 102-106
- Kirk-Othmer, Encyclopedia of Chemical Technology, Volume 15, John Wiley & Sons, 1981, Seiten 558-561

## Beschreibung

Die Erfindung betrifft ein Verfahren zum Trocknen und/oder Entgasen einer Flüssigkeit, dessen Endprodukt eine Flüssigkeit ist, durch Versprühen der Flüssigkeit in einen Gasraum bei einem Druck, der oberhalb des Dampfdrucks der Flüssigkeit und unterhalb des Dampfdrucks des auszutreibenden Mediums liegt, mittels wenigstens einer Düse, der die Flüssigkeit mit einem höheren Druck zugeführt wird.

Derartige Verfahren sind bekannt (EP-A 0 115 333; EP-A 0 122 908). Das Zerstäuben der Flüssigkeit mittels Düsen soll bewirken, daß die zu reinigende Flüssigkeit in möglichst kleine Teilchen aufgespalten wird, so daß auch kleinste eingeschlossene Gasblasen aus der Flüssigkeitsumhüllung befreit werden und abgezogen werden können. Zum anderen soll das in der Flüssigkeit enthaltene Wasser durch die Versprühung mittels Düsen leichter verdampft werden, um es dann ebenfalls in Dampfform abzuführen. Die Flüssigkeit kann sich dann an den Wänden des Sprühbehälters bzw. an Hilfswänden im Behälter niederschlagen und aus dem unteren Teil des Behälters abgepumpt werden.

Um eine bessere Niederschlagung der Flüssigkeit zu erreichen, ist es auch bekannt, entsprechende Hilfsmittel in den Behälter einzubringen, um die Oberfläche, an der die Flüssigkeit sich abscheiden kann, zu vergrößern und dadurch den Abscheideeffekt zu verbessern.

Bekannt ist es auch, zur Verbesserung des Trocknungs- und Entgasungseffektes in den evakuierten Behälter von außen zusätzlich Luft einzuführen, die insbesondere dazu dienen soll, den Wasserdampf bzw. das ausgetriebene Medium aufzunehmen, dadurch seinen Partialdruck zu senken und so zu verhindern, daß es sich wieder an die Tröpfchen der zu entgasenden bzw. zu trocknenden Flüssigkeit anlegt.

Aus DE 32 39 066 A1 ist es bekannt, das zur Herstellung CO₂-haltiger Getränke verwendete Wasser zunächst mit CO₂ zu versetzen und dann unter Vakuum fein verteilt zu versprühen, um das Wasser zu entlüften. Dabei wird die im Wasser gelöste Luft, aber auch ein Teil des schon gelösten CO₂ aus dem Wasser entbanden und abgesaugt. Die im Wasser enthaltene Luft wird vollständig durch das leichter lösliche CO₂ verdrängt. Es wird entlüftetes, aber in dem Maße, wie der Restgasanteil durch das gewählte Vakuum nicht mehr entfernt werden kann, leicht karbonisiertes Wasser erhalten. Eine vollständige Entgasung wird gemäß dieser Schrift nicht angestrebt.

Aus WO-A 85/00298 ist es bekannt, in Seewasser gelösten Sauerstoff durch Stickstoff zu ersetzen, indem dem Seewasser Stickstoff zugeführt und die Mischung anschließend in eine Trennkammer gepumpt wird.

Der Erfindung liegt die Aufgabe zugrunde, ein Verfahren zu schaffen, durch die mit einfachen Mitteln ein verbesserter Trocknungs- bzw. Entgasungseffekt erreicht wird.

Die erfindungsgemäße Lösung besteht darin, daß in den Flüssigkeitsstrom vor dessen Eintritt in die Düse oder bei dessen Durchtritt durch den Düsenkörper bevor sie aus der Sprühöffnung der Düse austritt Luft eingeführt wird und daß der Druck des Flüssigkeit-Luft-Gemischs vor der Sprühöffnung der Düse wenigstens zehnfach höher als danach ist.

Die Wirkung der Erfindung besteht darin, daß bereits beim Versprühen Luft zur Aufnahme des auszutreibenden Mediums an den Flüssigkeitströpfchen vorhanden ist, so daß schon beim Zerstäuben der Flüssigkeit mit der Luft die in der Flüssigkeit enthaltenen Wasser- und sonstigen Anteile verdampfen und von der Luft aufgenommen werden können. Ferner verbessert die in der Flüssigkeit enthaltene Luft infolge ihrer Expansion die feine Verteilung der Flüssigkeit, da diese infolge der Expansion des Luftanteils in kleinste Teilchen zerrissen wird, da der Druck des Flüssigkeits-Gas-Gemischs vor der Düse wenigstens zehnfach höher als danach ist. Das ist insbesondere dann der Fall, wenn in dem Behälter, in welchem die Versprühung vorgenommen wird, Vakuum aufrechterhalten wird. So ergibt sich beispielsweise bei der Aufrechterhaltung eines Vakuums von 10 mbar im Sprühbehälter und der Zuführung der Flüssigkeit mit dem Gas bei Atmosphärendruck etwa eine Verhundertfachung des Luftvolumens und ein entsprechend starker Zerteilungseffekt auf die Flüssigkeit.

Das Verhältnis der Drücke vor und nach der Düse ist größer als 10, vorzugsweise größer als 20.

Erfindungsgemäß wird weiter vorgeschlagen, von der entgasten und getrockneten Flüssigkeit einen Teilstrom abzuzweigen und erneut in den unter Vakuum stehenden Trocknungs- und Entgasungsbehälter mittels Düsen einzuleiten und jeweils vor dem Eintritt in die Düsen in den Flüssigkeitsstrom Luft einzuführen. Dies ist insbesondere dann zweckmäßig, wenn beim einmaligen Durchströmen der Flüssigkeit durch den Trocknungs- und Entgasungsbehälter der gewünschte Trocknungs- und Entgasungsgrad nicht erreicht wird.

Ferner kann der Trocknungseffekt dadurch verbessert werden, daß die Luft vor Einführung in den Flüssigkeitsstrom getrocknet wird.

Als besonders vorteilhaft hat es sich erwiesen, wenn man die Flüssigkeit in den Vakuumbehälter mittels Vollkegel-Düsen einsprüht, so daß sie flächig auf die Abscheidefläche auftrifft; so kann man am besten den gesamten Raum des evakuierten Behälters ausnutzen.

Ferner kann es zweckmäßig sein, wenn das versprühte Flüssigkeits-Luft-Gemisch im Trocknungs- und Entgasungsbehälter durch Bereiche geleitet wird, die mit Füllkörpern gefüllt sind. Man erleichtert dadurch der in feinste Nebeltröpfchen zerrissenen Flüssigkeit durch die vergrößerte Oberfläche die Abscheidung. Solche mit Füllkörpern versehenen Zonen können sowohl unterhalb der Düse oberhalb des Flüssigkeitsspiegels als auch zwischen der Düse und der Gasabsaugestelle vorgesehen werden. Bei letzterer soll verhindert werden, daß mit Luft, Gas und Dampf evtl. Tröpfchen der zu entgasenden bzw. zu trocknenden Flüssigkeit mit herausgezogen werden.

Unter der Düse wird im engeren Sinn die Sprühöffnung verstanden, bei deren Durchströmen der Druck vom Zuführungsdruck abfällt auf den Behälterinnendruck. Wenn vereinfachend davon gesprochen wird, daß die Luft dem Flüssigkeitsstrom im Strömungsweg vor der Düse zugeführt wird, so soll dies den Fall einschließen, daß die Zuführung innerhalb des Düsenkörpers aber vor der besagten Sprühöffnung geschieht.

Die Erfindung wird im folgenden näher unter Bezugnahme auf die Zeichnung erläutert. Darin zeigen:
- Fig. 1: eine Anordnung, bei der die Flüssigkeit den Entgasungs- und Trocknungsbehälter nur einmal durchströmt, und
- Fig. 2: eine Anordnung, bei der ein Teilstrom der bereits gereinigten und getrockneten Flüssigkeit im Umlauf dem Trocknungs- und Entgasungsbehälter wieder zugeführt wird.

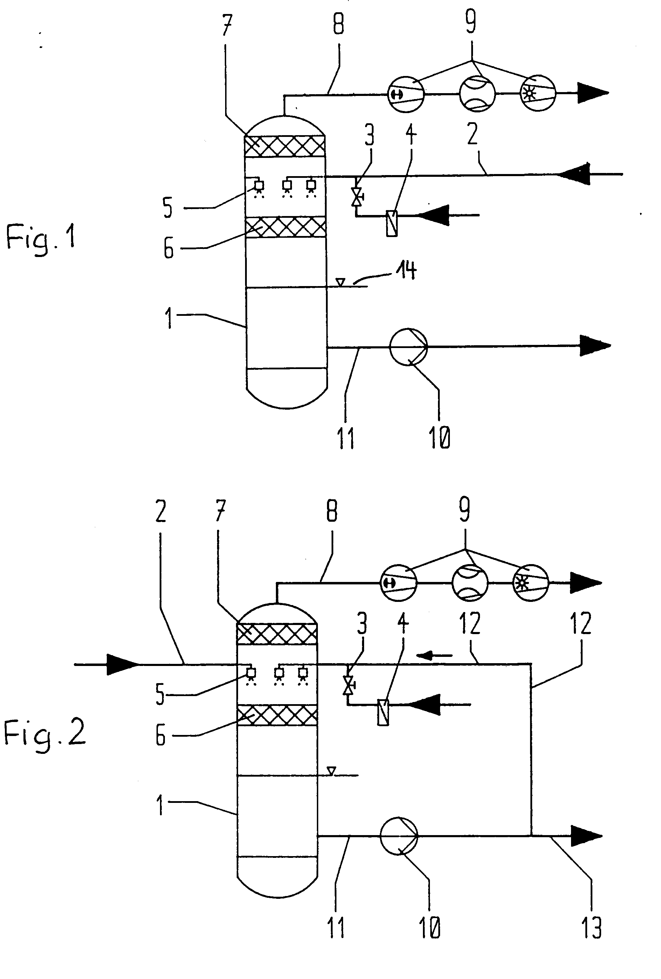

Gemäß Fig. 1 wird dem Trocknungs und Entgasungsbehälter 1 über die Zuführungsleitung 2 die zu trocknende und zu entgasende Flüssigkeit zugeführt. Durch Vakuum in dem Behälter 1 und/oder durch entsprechende Temperierung der Flüssigkeit wird dafür gesorgt, daß die erforderlichen Dampfdruckverhältnisse eingehalten sind. Über die Leitung 3 wird in die Zuführungsleitung 2 Luft eingeführt. Gemischt mit der eingeführten Luft wird dann die Flüssigkeit über die Düse(n) 5 in den Innenraum des Behälters 1 eingesprüht.

Alternativ kann die Luft auch dem Düsenkörper zugeführt werden unter der Voraussetzung, daß sie darin mit der Flüssigkeit gemischt wird, bevor beide gemeinsam durch die Düsenöffnung in den Behälterraum eintreten, in welchem der niedrigere Druck herrscht. Bevor die Luft der Flüssigkeit zugeführt wird, durchläuft sie eine Trocknungseinrichtung 4. Im Behälter sind die Zonen 6 und 7 mit Füllkörpern versehen. Die Zone 6 liegt zwischen den Düse(n) und dem Spiegel 14 der sich unten im Behälter ansammelnden, gereinigten Flüssigkeit. Die Zone 7 liegt im Strömungsweg vor der Abzugsöffnung für Luft, Gas und Wasserdampf, die durch die Leitung 8 von dem Vakuumpumpenstand 9 aus dem Behälter herausgesogen werden, dessen in der Zeichnung angedeutete drei Komponenten eine Rootspumpe, eine Strahlpumpe und eine Flüssigkeitsringpumpe bedeuten. Die gereinigte und entgaste Flüssigkeit wird mittels der Pumpe 10 über die Leitung 11 dem Trocknungs- und Entgasungsbehälter entnommen.

Gemäß Fig. 2 wird ebenfalls dem vorzugsweise unter Vakuum stehenden Trocknungs- und Entgasungsbehälter 1 über die Leitung 2 die zu trocknende und zu entgasende Flüssigkeit zugeführt. Sie strömt über eine oder mehrere Düsen 5 in den evakuierten Trocknungs- und Entgasungsbehälter 1 ein und fließt in vorläufig gereinigtem Zustand in den unteren Teil des Behälters. Die unten im Behälter sich sammelnde Flüssigkeit wird von der Pumpe 10 über die Leitung 11 dem Behälter entnommen. Ein Teil wird über die Leitung 13 seiner Bestimmung zugeführt. Der andere Teil gelangt in die Umführungsleitung 12 und wird dem Behälter in der unter Bezugnahme auf Fig. 1 bereits beschriebenen Weise wieder zugeführt. Diesem Teilstrom wird über die Leitung 3 vor Eintritt in die Düsen des Behälters Luft zugesetzt, die zuvor eine Trocknungseinrichtung 4 durchläuft.

Im Behälter selbst sind wie im Beispiel der Fig. 1 Zonen 6 und 7 mit Füllkörpern versehen, die ein leichteres Abscheiden der Flüssigkeitströpfchen ermöglichen sollen. Über die Leitung 8 wird durch die Vakuumpumpe 9 Luft, Gas und Wasserdampf aus dem Behälter herausgezogen. In dieser Darstellung ist die Einführung eines Luftstroms nur in dem abgezweigten Teilstrom der bereits gereinigten und entgasten Flüssigkeit dargestellt. Man kann eine solche Luftzugabe hier aber auch in der Zuführungsleitung 2 vorsehen.

Wenn ein hoher Reinigungs- bzw. Trocknungsgrad erreicht werden soll, können mehrere Entgasungs- und Trocknungsbehälter in Serie geschaltet sein. Im Fall großer zu behandelnder Mengen können mehrere parallel zueinander vorgesehen sein. Serien- und Parallelschaltung können umschaltbar sein, wenn man unterschiedlichen Forderungen gerecht werden will.

## Patentansprüche

1. Verfahren zum Trocknen und/oder Entgasen einer Flüssigkeit, insbesondere von Ölen oder Alkoholen, dessen Endprodukt eine Flüssigkeit ist, durch Versprühen der Flüssigkeit in einen Gasraum bei einem Druck, der oberhalb des Dampfdrucks der Flüssigkeit und des Dampfdrucks des auszutreibenden Mediums liegt, mittels wenigstens einer Düse, der die Flüssigkeit mit einem höheren Druck zugeführt wird, dadurch gekennzeichnet, daß in den Flüssigkeitsstrom vor dessen Eintritt in die Düse oder bei dessen Durchtritt durch den Düsenkörper, bevor sie aus der Sprühöffnung der Düse austritt, Luft eingeführt wird und daß der Druck des Flüssigkeit-Luft-Gemischs vor der Sprühöffnung der Düse wenigstens zehnfach höher als danach ist.

2. Verfahren nach Anspruch 1, dadurch gekennzeichnet, daß die Flüssigkeit im Vakuum versprüht wird.

3. Verfahren nach Anspruch 1 oder 2, dadurch gekennzeichnet, daß von der entgasten bzw. getrockneten Flüssigkeit ein Teilstrom abgezweigt und erneut in derselben Weise behandelt wird.

4. Verfahren nach einem der Ansprüche 1 bis 3, dadurch gekennzeichnet, daß die Luft vor Einführung in den Flüssigkeitsstrom getrocknet wird.

## Claims

1. A process for drying and/or degassing a liquid, in particular from oils or alcohols, the end product of which is a liquid, by spraying the liquid into a gas chamber at a pressure which is above the vapour pressure of the liquid and the vapour pressure of the medium to be driven off, by means of at least one nozzle, to which the liquid is fed at a higher pressure, characterised in that air is introduced into the flow of liquid upstream of its inlet into the nozzle or during its passage through the nozzle body, before it leaves the spray orifice of the nozzle, and in that the pressure of the liquid-air mixture upstream of the nozzle spray orifice is at least ten times higher than downstream thereof.

2. A process according to Claim 1, characterised in that the liquid is sprayed in a vacuum.

3. A process according to Claim 1 or 2, characterised in that a partial flow is branched off from the degassed and/or dried liquid and is retreated in the same manner.

4. A process according to any one of Claims 1 to 3, characterised in that the air is dried before being introduced into the liquid flow.

## Revendications

1. Procédé de séchage et/ou de dégazage d'un liquide, en particulier d'huiles ou d'alcools, dont le produit final est lui-même un liquide, par pulvérisation de ce liquide dans une chambre à gaz sous une pression plus élevée que la pression de vaporisation dudit liquide et la pression de vaporisation du milieu à expulser, au moyen d'au moins une buse à laquelle est amené le liquide sous une pression plus élevée, caractérisé en ce que de l'air est introduit dans le courant liquide avant son entrée dans la buse ou lors de son passage à travers le corps de la buse avant son échappement par l'orifice de vaporisation de ladite buse, et que la pression du mélange liquide-air avant l'orifice de vaporisation de la buse est au moins dix fois supérieure à ce qu'elle est après cet orifice.

2. Procédé selon la revendication 1, caractérisé en ce que le liquide est pulvérisé dans le vide.

3. Procédé selon la revendication 1 ou 2, caractérisé en ce que l'on fait dériver un courant partiel du liquide dégazé ou séché et qu'on le traite une nouvelle fois de la même manière.

4. Procédé selon l'une des revendications 1 à 3, caractérisé en ce que l'air est séché avant son introduction dans le courant liquide.
